# EUROPÄISCHE PATENTSCHRIFT

(11) **EP 2 975 369 B1**
(45) Veröffentlichungstag und Bekanntmachung des Hinweises auf die Patenterteilung: **15.11.2017**
(21) Anmeldenummer: 15166308.5
(22) Anmeldetag: 05.05.2015
(51) Int. Cl.: G01J 3/06, G01J 3/18

(54) **MONOCHROMATOR MIT SCHWINGUNGSARM BEWEGBAREN OPTISCHEN ELEMENTEN**
MONOCHROMATOR WITH LOW-VIBRATION MOVABLE OPTICAL ELEMENTS
MONOCHROMATEUR DOTÉ D'ÉLÉMENTS OPTIQUES MOBILES PRODUISANT PEU DE VIBRATIONS

(30) Priorität: 18.07.2014 CH 10932014
(43) Veröffentlichungstag der Anmeldung: 20.01.2016
(73) Patentinhaber: Tecan Trading AG, 8708 Männedorf (CH)
(72) Erfinder: Niggl, Lutz, 83329 Waging (DE); Steinbacher, Andreas, 50802 Grödig (AT)
(74) Vertreter: OK pat AG

(56) Entgegenhaltungen:
- EP-B1- 1 498 707
- DD-A- 59 311
- GB-A- 2 216 601
- US-A1- 2005 017 191
- US-A1- 2009 225 315

## Beschreibung

Die Erfindung betrifft gemäss dem Oberbegriff des unabhängigen Anspruchs 1 einen Monochromator, welcher zumindest ein optisches Gitter zum stufenlosen Auffächern von einfallendem Licht einer Lichtquelle umfasst. Das optische Gitter ist zum Ausrichten gegenüber dem einfallenden Licht drehbar ausgebildet. Der Monochromator umfasst zudem eine Antriebs-Einheit zum Drehen des optischen Gitters, sowie eine Antriebs-Stange, welche zum Drehen des optischen Gitters die Antriebs-Einheit mit dem optischen Gitter verbindet. Dabei hat die Antriebs-Stange eine Längsachse, um welche diese Antriebs-Stange und das optische Gitter drehbar sind. Weiterhin umfasst der Monochromator eine Steuereinheit, welche die Antriebs-Einheit und damit die Drehung des optischen Gitters steuert.

Die Erfindung betrifft zudem eine Verwendung eines Monochromators und ein System zum Messen der Fluoreszenz und/oder Lumineszenz und/oder Absorption von mit dem Licht aus einer Lichtquelle bestrahlten Proben, wobei das System zumindest einen Monochromator umfasst.

Insbesondere in biologischen oder klinischen Laboratorien werden vielfach optische Geräte zur Analyse von flüssigen oder festen Proben verwendet. Je nach Anwendung kommen dabei verschiedene Geräte zum Einsatz: Photometer messen eine flüssige Probe durchdringendes Licht. Sie werden z.B. für die Konzentrationsbestimmung von DNA verwendet. Nephelometer dagegen detektieren von einer Probe gestreutes Licht, z.B. zur Konzentrationsbestimmung einer Suspension kleiner Partikel in einer Flüssigkeit. Mit einem Fluorometer dagegen wird die von einer Probe abgegebene Fluoreszenz gemessen. Zudem können diese Geräte so ausgebildet sein, dass die Wellenlänge des Anregungslichts und/oder die Wellenlänge des von der Probe abgegebenen Lichts gezielt ausgewählt werden kann bzw. ausgewählt werden können. Messsysteme, welche mehrere solche Geräte vereinen, werden Multifunktions-Reader genannt. Sind solche Multifunktions-Reader z.B. speziell für die Analyse von Proben in Wells von sogenannten Mikrotiterplatten ausgebildet, können somit eine Vielzahl von Proben für unterschiedlichste Verwendungen optisch analysiert werden.

Solche Multifunktions-Reader finden aufgrund ihrer Kompaktheit und Vielseitigkeit immer mehr Verwendung in verschiedenen Laboratorien. Zur spektralen Auftrennung und Isolierung bestimmter Wellenlängen aus einem einfallenden polychromatischen Licht (also Licht, das aus verschiedenen Wellenlängen zusammengesetzt ist) werden in solchen Multifunktions-Readern beispielsweise Monochromatoren verwendet. Ein solcher Monochromator kann zum Beispiel mittels eines Prismas einfallendes Licht auffächern. Alternativ kann ein Monochromator ein optisches Gitter umfassen, mit dem einfallendes Licht gebeugt und damit aufgefächert wird. Mittels einer nachgeschalteten Schlitzblende wird dann nur der gewünschte Wellenlängenbereich für die Analyse durchgelassen. Ein Multifunktions-Reader mit einem Monochromator ist beispielsweise aus der Patentschrift EP 1 498 707 B1 des aktuellen Anmelders bekannt.

Zum stufenlosen Auffächern, z.B. von polychromatischem Licht, wird dabei dieses Licht auf das optische Gitter gelenkt. An der speziellen, gitterartigen Beschichtung werden dann die verschiedenen Wellenlängen des polychromatischen Lichts unterschiedlich stark gebrochen, was zu der Auffächerung führt. Mittels einer nachgeschalteten Schlitzblende kann dann aus dem aufgefächerten Lichtstrahl örtlich abhängig eine gewünschte Wellenlänge herausgelesen werden. Da typischerweise die nachgeschaltete Schlitzblende fest installiert ist, erfolgt die Auswahl der gewünschten Wellenlänge über eine Bewegung des optischen Gitters:
Je nach Ausrichtung des optischen Gitters zum einfallenden Licht fällt eine ausgewählte Wellenlänge des nach Wellenlängen aufgefächerten Lichts ortsabhängig auf den Filter. Die Auswahl der Wellenlänge erfolgt damit mittels der Positionierung des optischen Gitters in Relation zum einfallenden Licht.

Um das optische Gitter möglichst stufenlos gegenüber dem einfallenden Licht ausrichten zu können, werden verschiedene Antriebs-Systeme verwendet. Bekannt ist beispielsweise die Verwendung eines Schrittmotors, mit dem das optische Gitter direkt mittels einer Antriebs-Stange um eine Achse drehend bewegt werden kann. Ein solcher Schrittmotor ermöglicht schnelle und diskrete Drehbewegungen des optischen Gitters, was insbesondere für das sogenannte "High Speed Continuous Wavelength Scanning" von Vorteil ist bzw. dies erst ermöglicht. Allerdings führt die Massenträgheit insbesondere des optischen Gitters dazu, dass bei schnellen Wechseln zwischen verschiedenen Ausrichtungspositionen bzw. Drehwinkeln des optischen Gitters - bei denen hohe Beschleunigungs- und Bremskräfte entstehen - hochfrequente mechanische Vibrationen des optischen Gitters entstehen. Um die gewünschte Wellenlängen-Präzision zu erzielen, führt dies nun zu verlängerten Wartezeiten, in denen die Vibrationen ausklingen und dann tatsächlich nur die gewünschte Wellenlänge auf die nachgeschaltete Schlitzblende trifft.

Die Verwendung von mechanischen Dämpfungselementen, insbesondere von Viskositätsdämpfern, zum Dämpfen dieser Vibrationen ist bekannt. Diese Dämpfer haben eine hohe Dämpfwirkung insbesondere bei auftretenden hochfrequenten Resonanzen, sind aber weniger effizient, z.B. bei Schwingungen, die bei einem Bewegungs-Stopp auftreten. Nachteilig ist zudem, dass das zu drehende optische Gitter innerhalb eines vorbestimmten Winkelbereichs, z.B. ein diskreter Winkelbereich eines Schrittmotors, durch die Dämpfung nicht wie gewünscht stets an der hierin mittigen Sollwinkelposition zum Stillstand kommt sondern zumeist an einer aussermittigen Winkelposition zum Stillstand kommt. Somit kommt das optische Gitter an einer innerhalb dieses Winkelbereichs unbestimmten Winkelposition zum Stehen, wodurch eine Ungenauigkeit in der Positionierung entsteht. Dies bewirkt eine Ungenauigkeit der Wellenlängenselektion.

Bei Monochromatoren gibt es Anstrengungen dahingehend, dass sich das optische Gitter möglichst ohne Reibungsverluste umdrehen soll, um hierdurch eine Positionierung mit hoher Geschwindigkeit und hoher Genauigkeit zu ermöglichen. Diese Anstrengungen umfassen beispielsweise die Verwendung von hochpräzisen Kugellagern zur reibungsfreien Drehlagerung des optischen Gitters und die Verwendung von nahezu reibungsfreien Schrittmotoren mit hoher Qualität. Hierdurch wird insgesamt die Beeinflussung durch das Kugellager und den Schrittmotor auf ein absolutes Minimum reduziert. Durch die Bereitstellung der mechanischen Dämpfung wird diesen Bestrebungen jedoch nachteilhaft entgegengewirkt. Ein weiterer Nachteil bei der Verwendung von einem mechanischen Dämpfungs-element bei einem Monochromator liegt in dessen Verschleiss durch Reibung. Mit zunehmendem Verschleiss wird die Genauigkeit der Positionierung zusätzlich beeinträchtigt. Ein Monochromator mit mechanischer Dämpfung ist beispielsweise aus der US2009/0225315 bekannt.

Die Aufgabe der vorliegenden Erfindung ist es, einen Monochromator vorzuschlagen, mit welchem spektrale Messungen mit verschiedenen, ausgelesenen Wellenlängen mit hoher Präzision und kurzen Wartezeiten durchgeführt werden können. Diese Aufgabe wird durch die Merkmale des unabhängigen Anspruchs 1 gelöst. Zusätzliche bevorzugte und erfinderische Merkmale ergeben sich aus den jeweils abhängigen Ansprüchen.

Die vorliegende Erfindung umfasst folgende Vorteile:
- Ein Wechsel zwischen verschiedenen, ausgewählten Wellenlängen zum Durchführen von spektralen Analysen kann schnell und ohne grössere Wartezeiten durchgeführt werden, ohne dass Einbussen im Hinblick auf die Präzision der ausgewählten Wellenlänge hingenommen werden müssen.
- Durch das kontaktfreie Bewegen der Elemente der Wirbelstromdämpfung erfolgt ein verschleissfreies Dämpfen der durch die Bewegung des optischen Gitters erzeugten Schwingungen bzw. Vibrationen.
- Die angelegte Dämpfungskraft ist proportional zur Drehgeschwindigkeit des optischen Gitters.

Die vorliegende Erfindung wird im Folgenden mittels den dieser Anmeldung beigefügten Figuren näher erläutert. Dabei zeigen diese Figuren in teilweise stark schematisierter Darstellung bevorzugte Ausführungsformen der Erfindung, ohne deren Umfang einzuschränken, sowie Beispiele ausserhalb des Umfangs der Erfindung. Es zeigen:
- Fig. 1: eine Übersicht über die durch einen erfindungsgemässen Monochromator vermittelten Lichtwege mit den wesentlichen optischen Elementen, wobei: Fig. 1A: einen Monochromator mit einem optischen Gitter zeigt, und Fig. 1B: einen Doppel-Monochromator mit zwei optischen Gittern zeigt;
- Fig. 2: eine stark vereinfachte Frontansicht eines erfindungsgemässen Monochromators mit den wesentlichen Elementen des Antriebs und der Dämpfung;
- Fig. 3: verschiedene Formen der elektrisch leitfähigen Scheibe des Monochromators, wobei Fig. 3A eine volle Kreisscheibe, und Fig. 3B eine Kreisscheibe mit sequenziellen Ausschnitten zeigt;
- Fig. 4: verschiedene Ausbildungen und Anordnungen des erstes DämpfungsElements mit elektrisch leitfähiger Fläche und des zweiten DämpfungsElements mit Magnetfeld in Relation zueinander, wobei
Fig. 4A eine planparallel Anordnung eines ersten und zweiten Dämpfungselements, wobei das zweite Dämpfungselement als Permanentmagnet ausgebildet ist,
Fig. 4B eine parallele Anordnung eines ersten Dämpfungselements und eines zweiten Dämpfungselements mit mehreren horizontale Permanentmagneten,
Fig. 4C eine parallele Anordnung eines ersten Dämpfungselements mit mehreren horizontalen Permanentmagneten und eines zweiten Dämpfungselements,
Fig. 4D eine verschachtelte Anordnung eines ersten Dämpfungselements und eines zweiten Dämpfungselements mit mehreren vertikalen Permanentmagneten,
Fig. 4E eine verschachtelte Anordnung eines ersten Dämpfungselements mit mehreren vertikalen, schief liegenden und horizontalen Permanentmagneten und eines zweiten Dämpfungselements,
Fig. 4F eine verschachtelte Anordnung eines ersten Dämpfungselements und eines zweiten Dämpfungselements mit mehreren schief liegenden Permanentmagneten, und
Fig. 4G eine abwechselnd gestapelte Anordnung von zwei ersten Dämpfungselementen und zwei zweiten Dämpfungselementen mit mehreren horizontalen Permanentmagneten zeigt;
- Fig. 5: einen Vergleich des Einschwingverhaltens des optischen Gitters eines Monochromators bei einer ausgewählten Wellenlänge, wobei die Einstellzeit basierend auf der messbaren Wellenlängen-Abweichung dargestellt ist, wobei
Fig. 5A: die Einstellzeit bei einem aus dem Stand der Technik bekannten Monochromator zeigt, und
Fig. 5B die Einstellzeit beim erfindungsgemässen Monochromator gemäss einer bevorzugten Ausführungsform zeigt;
- Fig. 6: einen beispielhaften Aufbau des erfindungsgemässen Monochromators, wobei
Fig. 6A den Monochromator in einer Seitenschnittansicht, und
Fig. 6B den Monochromator in einer Draufsicht zeigt.

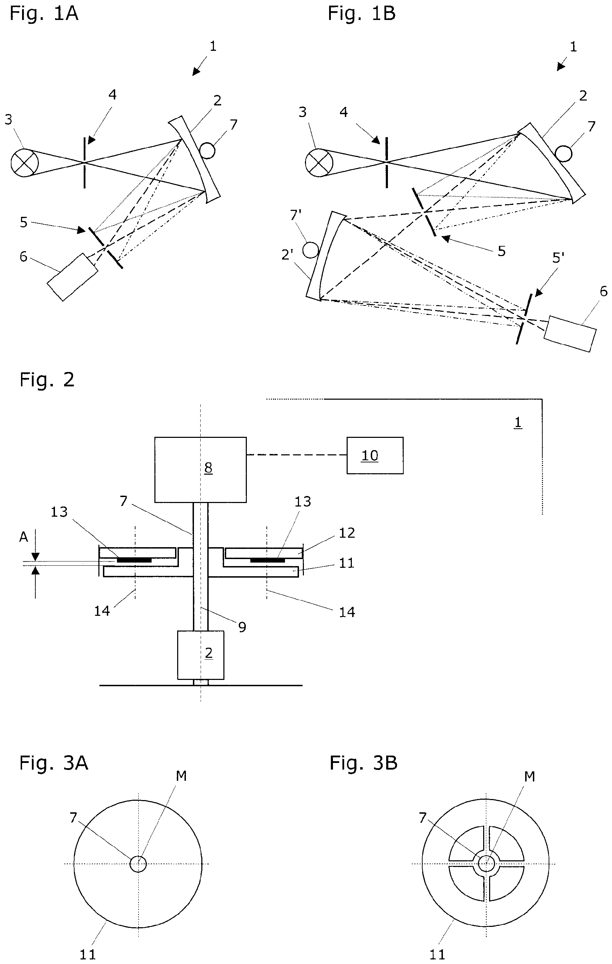

Die Figur 1 zeigt eine Übersicht über die durch einen erfindungsgemässen Monochromator 1 vermittelten Lichtwege mit den wesentlichen optischen Elementen. In Fig. 1A ist der Monochromator 1 mit nur einem optischen Gitter 2 gezeigt. Der Lichtstrahl einer Lichtquelle 3 verläuft durch eine erste Schlitzblende 4 und trifft auf das optische Gitter 2. Dieser einfallende Lichtstrahl wird durch das optische Gitter 2 gebeugt und somit stufenlos aufgefächert. Das aufgefächerte Licht trifft auf eine erste nachgeschaltete Schlitzblende 5, mittels der nur ein gewünschter Wellenlängenbereich durchgelassen wird. Die erste nachgeschaltete Schlitzblende 5 ist fest installiert. Mit anderen Worten, aus dem aufgefächerten Lichtstrahl wird örtlich abhängig eine gewünschte Wellenlänge herausgelesen. Das Licht mit dem ausgelesenen Wellenlängenbereich trifft auf eine nachgeschaltete Analyseeinrichtung 6. Gepunktet bzw. strichpunktiert sind hier beispielhafte Wellenlängenbereiche, deren Licht gerade nicht durch die erste nachgeschaltete Schlitzblende 5 hindurchtreten kann.

Die Auswahl der gewünschten Wellenlänge an der ersten nachgeschalteten Schlitzblende 5 erfolgt über ein Drehen des optischen Gitters 2. In Abhängigkeit der Ausrichtung des optischen Gitters 2 zum einfallenden Licht fällt eine ausgewählte Wellenlänge des nach Wellenlängen aufgefächerten Lichts ortsabhängig auf den Filter. Die Auswahl der Wellenlänge erfolgt damit mittels der Positionierung des optischen Gitters 2 in Relation zum einfallenden Licht. Hierzu wird das optische Gitter 2 mittels einer am optischen Gitter 2 fixierten Antriebs-Stange 7 einer später beschriebenen Antriebs-Einheit gedreht.

Figur 1B zeigt einen Aufbau eines durch den Monochromator 1 vermittelten Lichtweges gemäss dem zuvor beschriebenen Aufbau in der Fig. 1A, wobei bei dem hier gezeigten Aufbau der ersten nachgeschalteten Schlitzblende 5 ein weiteres optisches Gitter 2' nachgeschaltet ist. Das auf das zweite optische Gitter 2' einfallende Licht wird durch das zweite optische Gitter 2' ebenfalls gebeugt und stufenlos aufgefächert. Das somit aufgefächerte Licht trifft auf eine zweite nachgeschaltete Schlitzblende 5', welche wiederum nur einen gewünschten Wellenlängenbereich durchlässt. Somit wird aus dem aufgefächerten Lichtstrahl örtlich abhängig die gewünschte Wellenlänge herausgelesen, welche auf die nachgeschaltete Analyseeinrichtung 6 trifft. Die zweite nachgeschaltete Schlitzblende 5' ist ebenfalls fest installiert, während das zweite optische Gitter 2' zur besonders präzisen Auswahl des Wellenlängenbereichs drehbar ist. Zum Drehen des zweiten optischen Gitters 2' ist dieses mit einer zweiten Antriebs-Stange 7' verbunden, welche über eine Antriebs-Einheit (nicht gezeigt) gedreht wird.

Die Figur 2 zeigt eine vereinfachte Frontansicht eines erfindungsgemässen Monochromators 1 mit den wesentlichen Elementen des Antriebs und der Dämpfung. Der erfindungsgemässe Monochromator 1 umfasst eine Antriebs-Einheit 8 zum Drehen des optischen Gitters 2 über die zwischengefügte Antriebs-Stange 7 (siehe auch Fig. 1A). Die aus der Antriebs-Einheit 8 herausgeführte Antriebs-Stange 7 ist fest, d.h. drehstarr mit dem optischen Gitter 2 verbunden. Die Antriebs-Stange 7 umfasst eine Längsachse 9, um welche die Antriebs-Stange 7 und das optische Gitter 2 drehbar sind. Zur präzisen Drehsteuerung wird die Antriebs-Einheit 8 durch eine Steuereinheit 10 angesteuert.

Die Antriebs-Einheit 8 umfasst einen Schrittmotor. Ein Schrittmotor ermöglicht eine schnelle Drehbewegung des optischen Gitters 2 innerhalb diskreter Winkelbereiche. Die Antriebs-Stange 7 ist drehstarr mit einer elektrisch leitfähigen Scheibe 11 (dem ersten Dämpfungselement) verbunden. Hierbei verläuft die Antriebs-Stange 7 bevorzugt durch den Mittelpunkt (M, siehe Fig. 3) der elektrisch leitfähigen Scheibe 11 und ist z.B. durch Anflanschen, durch eine Schweissverbindung oder Klebeverbindung oder eine weitere Verbindung drehstarr mit dieser verbunden. Die elektrisch leitfähige Scheibe 11 umfasst nicht-ferromagnetische Materialien, wie z.B. Aluminium-Legierungen.

Die elektrisch leitfähige Scheibe 11 steht in Wirkverbindung mit einem zweiten Dämpfungs-Element 12, welches eine Vielzahl von Permanentmagneten 13 umfasst. Die Permanentmagnete 13 sind z.B. konzentrisch zur Längsachse 9 und bei im Wesentlichen gleichen Abständen an einem Gehäuseabschnitt des Monochromators 1 angeordnet. Die einzelnen Permanentmagnete 13 sind somit statisch fixiert. Mit anderen Worten, sobald die Antriebs-Stange 7 gedreht wird, dreht sich die elektrisch leitfähige Scheibe 11 gegenüber den einzelnen Permanentmagneten 13. Verallgemeinert kann somit von einer Relativbewegung der beiden Dämpfungs-Elemente 11,12 gesprochen werden. Die Permanentmagnete 13 sind hier derart angeordnet, dass deren magnetische Achsen 14 parallel zur Längsachse 9 der Antriebs-Stange 7 ausgerichtet sind, sodass die Magnetfelder senkrecht zur elektrisch leitfähigen Scheibe 11 verlaufen.

Durch diese Anordnung aus der elektrisch leitfähigen Scheibe 11 und den hierzu deckungsgleich und planparallel angeordneten Permanentmagneten 13 ist eine Wirbelstrombremse zur Dämpfung von Schwingungen der Antriebs-Stange 7 geschaffen. Solche Schwingungen treten allgemein durch die Massenträgheit der bewegten Massen (in diesem Fall insbesondere der Antriebs-Stange 7 und des optischen Gitters 2) auf, nachdem der Schrittmotor der Antriebs-Einheit 8 die Umdrehung bzw. Drehposition der Antriebs-Stange 7 stoppt. Der hier auftretende Effekt einer Wirbelstrombremse dämpft nun diese Schwingung, indem durch induzierte Wirbelströme Energie aus der Schwingungsbewegung genommen wird. Sobald sich die elektrisch leitfähige Scheibe 11 durch das durch die Permanentmagnete 13 induzierte magnetische Feld bewegt, werden Wirbelströme induziert, welche gemäss der Lenz'schen Regel ein entgegengesetztes magnetisches Feld erzeugen. Hierdurch wird eine Kraft erzeugt, welche der Bewegung der elektrisch leitfähigen Scheibe 11 entgegengesetzt ist. Somit steigt die Dämpfkraft mit zunehmender Bewegung bzw. Drehgeschwindigkeit der Antriebs-Stange 7 an, da die Bremskraft proportional ist zur relativen Geschwindigkeit zwischen dem Magnetfeld und der elektrisch leitfähigen Scheibe 11. Somit wird vorteilhafterweise bei einer schnellen Bewegung auch eine zunehmende Bremskraft erzeugt. Mit abnehmendem elektrischem Widerstand des Materials der elektrisch leitfähigen Scheibe 11 fliessen höhere Ströme, wodurch in Folge stärkere entgegengesetzte Magnetkräfte erzeugt werden. Somit kann eine elektrisch hochleitfähige Scheibe 11 besser abgebremst werden. Die elektrisch leitfähige Scheibe 11 ist vorteilhafterweise aus einer Aluminium-Legierung hergestellt. Als Permanentmagnet kann beispielsweise ein Dauermagnet aus Neodym-Eisen-Bor (NdFeB) verwendet werden.

Es ist zu erwähnen, dass der hier gezeigte Effekt einer Wirbelstrombremse nicht zum Abbremsen der Antriebs-Stange 7 sondern als ein Dämpfelement verwendet wird. Durch die reibungsfreie Anordnung wird somit eine normale Bewegung der Antriebs-Stange 7 nicht beeinflusst. Hingegen werden Schwingungen einer hohen Frequenz so stark wie möglich gedämpft. Ein weiterer Vorteil besteht darin, dass das optische Gitter 2 nach dem Stoppen des Schrittmotors der Antriebs-Einheit 8 stets an einer exakt vorbestimmten Position, z.B. eine exakte Mittenposition innerhalb eines jeweiligen diskreten Winkelbereichs des Schrittmotors der Antriebs-Einheit 8, rasch zum Stehen kommt. Der Spalt zwischen der elektrisch leitfähigen Scheibe 11 und dem zweiten Dämpfungselement 12 kann zum Verhindern des Eindringens von Schmutz oder Feuchtigkeit bzw. zum mechanischen Schutz der drehenden Teile abgedeckt sein (vgl. senkrechte Striche in Fig. 2).

Die Figur 3 zeigt zwei verschiedene beispielhafte Ausgestaltungen der elektrisch leitfähigen Scheibe 11 des Monochromators 1. Die in der Fig. 3A gezeigte elektrisch leitfähige Scheibe 11 ist eine massiv ausgebildete Scheibe mit einer Öffnung in ihrem Mittelpunkt M zum Durchführen der Antriebs-Stange 7. Durch die massive Ausgestaltung der elektrisch leitfähigen Scheibe 11 können sich die darin ausgebildeten induzierten Ströme ungestört ausbreiten. Hierdurch kann dieser elektrisch leitfähigen Scheibe 11 eine maximale Dämpfkraft vermittelt werden.

Die in der Fig. 3B dargestellte elektrisch leitfähige Scheibe 11 enthält Aussparungs-Abschnitte in deren Innenbereich. Durch diese Aussparungen wird Material und somit Gewicht eingespart, d.h. das Massenträgheitsmoment der elektrisch leitfähigen Scheibe 11 wird reduziert. Der im Aussenumfangsbereich durchgängig ausgebildete Materialabschnitt der Scheibe 11 wird im Wesentlichen deckungsgleich zu den kreisförmig angeordneten Permanentmagneten (nicht gezeigt) des Monochromators 1 angeordnet. Somit treten die induzierten Ströme lediglich in diesem Materialabschnitt der Scheibe 11 auf. Im Vergleich zu der in Fig. 3A gezeigten Scheibe 11 ist mittels der in Figur 3B gezeigten Scheibe 11 eine reduzierte Dämpfwirkung erzielbar. Durch die Gewichtseinsparung in der Scheibe 11 von Figur 3B wird jedoch vorteilhafterweise deren Massenträgheit reduziert. Ein anwendungsspezifisches Abwägen der Ausgestaltung von der Scheibe 11 ist somit ermöglicht.

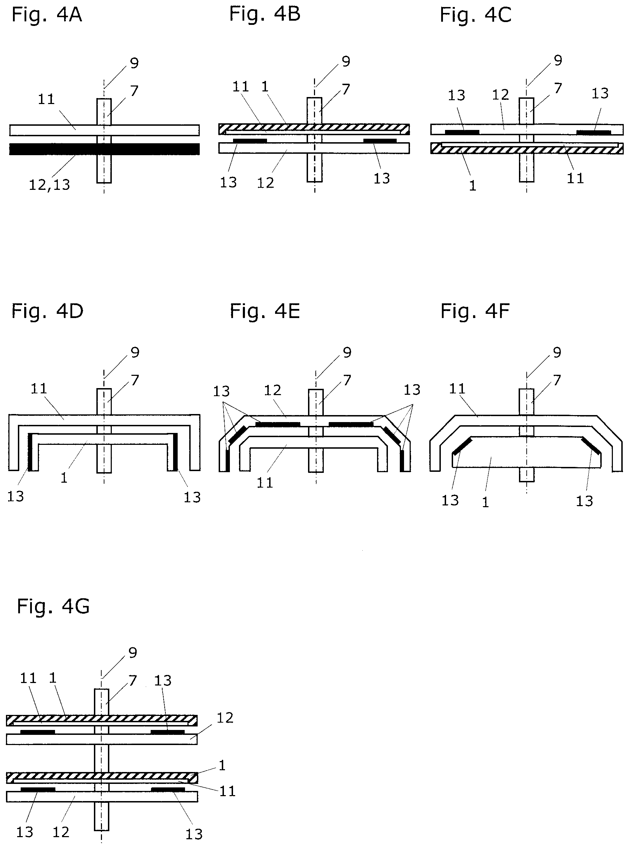

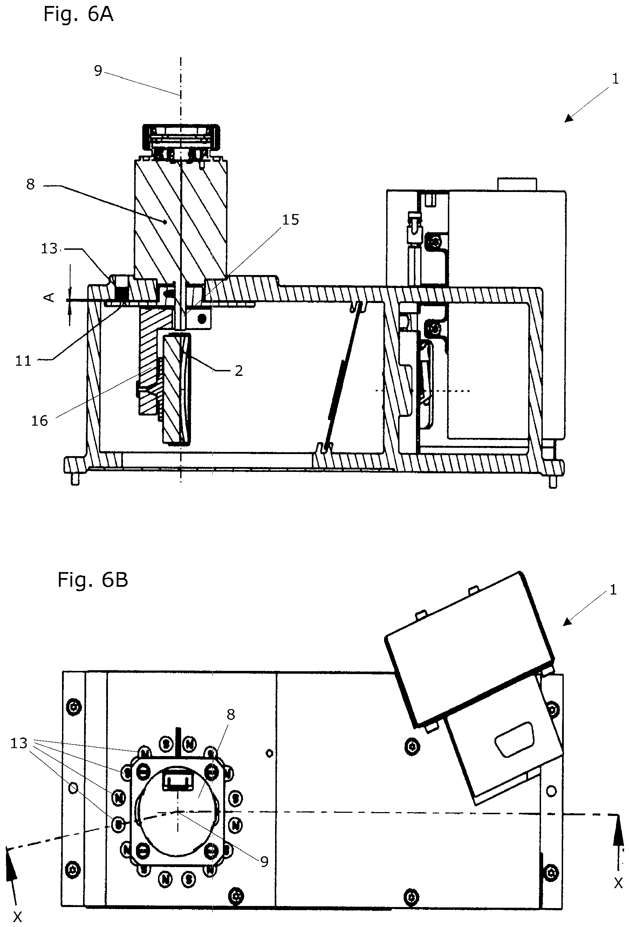

Die Figur 4 zeigt eine Übersicht über verschiedene Ausbildungen und Anordnungen des ersten Dämpfungs-Elements 11 und des zweiten Dämpfungs-Elements 12 in Relation zueinander. In der Fig. 4A ist das erste Dämpfungs-Element 11 als elektrisch leitfähige Scheibe 11 ausgebildet, während das zweite Dämpfungs-Element 12 nicht erfindungsgemäß beispielhaft als Magnetscheibe mit einem Permanentmagneten 13 ausgebildet ist. Eines der beiden scheibenförmigen Dämpfungselemente 11,12 ist drehstarr mit der Antriebs-Stange 7 verbunden, während das andere der scheibenförmigen Dämpfungselemente 12,11 statisch fixiert ist, beispielsweise befestigt am Gehäuse oder am Aufbau des Monochromators 1 (vgl. Fig. 6). Hierdurch sind die beiden scheibenförmigen Dämpfungselemente 11,12 in Relation zueinander drehbar. Die Feldlinien der Magnetscheibe durchdringen die elektrisch leitfähige Scheibe, welche aus nicht-ferromagnetischen Materialien hergestellt ist. Im Verlaufe einer Umdrehung der beiden scheibenförmigen Dämpfungselemente 11,12 in Relation zueinander werden in der elektrisch leitfähigen Scheibe 11 Wirbelströme induziert, durch welche ein entgegengesetztes Magnetfeld erzeugt wird, welches wiederum eine Kraft erzeugt, welche der Relativbewegung zwischen den beiden scheibenförmigen Dämpfungselemente 11,12 entgegengesetzt ist. Hierdurch wird eine Schwingungsbewegung der beiden scheibenförmigen Dämpfungselemente 11,12 in Relation zueinander gedämpft.

Die Fig. 4B zeigt eine erfindungsgemäße Anordnung, bei welcher das zweite Dämpfungs-Element 12 als eine Scheibe ausgebildet ist, welche kreisförmig (nahe an deren Umfang) mit Permanentmagneten 13 bestückt ist. Die Permanentmagnete 13 sind hier mit konstantem Abstand zur Längsachse der Antriebs-Stange 7 angeordnet. Oberhalb der mit den Permanentmagneten 13 bestückten, scheibenförmigen Dämpfungselements 12 ist die elektrisch leitfähige Scheibe des scheibenförmigen Dämpfungselements 11 angeordnet. Diese elektrisch leitfähige Scheibe 11 ist hier festsitzend in einer (schraffierten) Platte des Monochromators 1 eingelassen. Diese Anordnung erlaubt einen zuverlässigen Effekt einer Wirbelstrombremse zum Dämpfen der Schwingung zwischen den beiden scheibenförmigen Dämpfungselementen 11,12. Gleich dem zuvor genannten Beispiel in Fig. 4A sind die beiden scheibenförmigen Dämpfungselemente 11,12 in Relation zueinander um die Längsachse 9 drehbar.

Alternativ könnte die schraffierte Platte des Monochromators 1 aus einem elektrisch leitenden, nicht ferromagnetischen Material bestehen (z.B. aus einer Aluminium-Legierung) und eine Vertiefung aufweisen, in welcher sich die Permanentmagnete 13 auf der Scheibe 12 um die Längsachse 9 drehen. Diese Vertiefung dient als Abdeckung zum Verhindern des Eindringens von Schmutz oder Feuchtigkeit bzw. zum mechanischen Schutz der sich drehenden Teile bzw. der Permanentmagnete 13 (vgl. auch senkrechte Striche in Fig. 2).

Das in der Fig. 4C gezeigte Beispiel bezieht sich auf eine Anordnung, bei welcher die beiden scheibenförmigen Dämpfungselemente 11,12 in Relation zu dem zuvor genannten Beispiel in Fig. 4B umgekehrt angeordnet sind. Mit anderen Worten, die mit den Permanentmagneten 13 bestückte Scheibe 12 ist oberhalb der elektrisch leitfähigen Scheibe 11 angeordnet. In diesem Beispiel sind die Permanentmagnete 13 in jeweilige Aussparungen eingesetzt, welche in die Scheibe 12 eingetragen sind, sodass die in Richtung zur elektrisch leitfähigen Scheibe 11 ausgerichteten Flächen der Permanentmagnete 13 bündig zur Fläche der Scheibe 12 verlaufen. Der Abstand zwischen beiden Scheiben 11,12 kann hier, wie auch bei den weiteren Beispielen, zwischen 0.2mm und 0.5mm betragen. Je geringer dieser Abstand gewählt wird, desto höher ist die erzielbare Dämpfung. Wie zuvor erwähnt, ist auch bei diesem Beispiel eine der Scheiben 11,12 drehstarr mit der Antriebs-Stange 7 verbunden, während die weitere der Scheiben 12,11 statisch fixiert ist.

Bei den in Fig. 4D - 4F gezeigten Beispielen außerhalb dem Umfang der Erfindung sind die beiden Dämpfungs-Elemente 11,12 in ihrer Form im Wesentlichen U-förmig mit unterschiedlichen Durchmessern ausgebildet, wobei eines der Elemente von dem weiteren der Elemente im Wesentlichen umgeben ist. Durch diese Anordnung kann insgesamt der Flächenabschnitt erhöht werden, in welchem die Wirbelströme im elektrisch leitfähigen Dämpfungs-Element 11 erzeugt werden, wodurch im Umkehrschluss die Dämpfwirkung erhöht wird.

Bei dem in Fig. 4D gezeigten Beispiel sind die beiden Dämpfungs-Elemente 11,12 im Wesentlichen becherförmig ausgebildet. An den Flanschabschnitten des Dämpfungs-Elements 12, d.h. an jenen Abschnitten des Dämpfungs-Elements 12, welche parallel zur Längsachse 9 ausgerichtet sind, sind umlaufend Permanentmagnete 13 angebracht. Die Magnetfelder dieser Permanentmagnete 13 dringen in beabstandete korrespondierende Flanschabschnitte des elektrisch leitfähigen Dämpfungs-Elements 11 ein. Eines der Dämpfungs-Elemente 11,12 ist drehstarr mit der Antriebs-Stange 7 verbunden, während das weitere der Dämpfungs-Elemente 12,11 statisch fixiert ist. Eine Schwingung bzw. Oszillation dieser beiden Dämpfungs-Elemente 11,12 in Relation zueinander wird durch die Wirkung der Wirbelstrombremse gedämpft.

Bei der in Fig. 4E gezeigten Ausgestaltung sind becherförmige Dämpfungs-Elemente 11,12 an den Verbindungsstellen zu den jeweiligen Flanschabschnitten mit Abkantungen versehen. Es wird hierdurch ein erhöhter Flächenbereich bereitgestellt, wodurch eine entsprechend höhere Bestückung mit Permanentmagneten 13 möglich ist. Hieraus resultiert eine erhöhte Dämpfungswirkung.

Bei dem in Fig. 4F gezeigten Beispiel ist der Innenbereich der Abkantung des zweiten Dämpfungs-Elements 12 mit Permanentmagneten 13 bestückt. Der korrespondierende Aussenbereich der Abkantung des ersten Dämpfungs-Elements 11 ist parallel zu der Abkantung des zweiten Dämpfungs-Elements 12 ausgerichtet. Hierdurch ist eine anwendungsspezifische Dämpfung einstellbar.

Die Fig. 4G zeigt ein Beispiel, bei welchem zwei Paare aus jeweils dem ersten und zweiten Dämpfungs-Element konzentrisch an der Antriebs-Stange 7 angeordnet sind. Das erste Dämpfungs-Element 11 ist jeweils durch eine elektrisch leitfähige Scheibe gebildet, während das zweite Dämpfungs-Element 12 jeweils durch eine Scheibe gebildet ist, an welcher eine Vielzahl von Permanentmagneten 13 ringförmig angeordnet sind. Analog zu den zuvor genannten Beispielen sind entweder die elektrisch leitfähigen Scheiben 12 oder die mit den Permanentmagneten bestückten Scheiben 11 drehstarr mit der Antriebs-Stange 7 verbunden, während die weiteren Scheiben hiervon statisch fixiert sind (z.B. an Gehäuseabschnitten befestigt). Das in Fig. 4G gezeigte Beispiel entspricht einer doppelten bzw. paarweisen Anordnung der in Fig. 4B gezeigten Anordnung. Somit ist eine im Vergleich zu der Anordnung in Fig. 4B doppelte Kraft zum Dämpfen der Scheiben 11,12 in Relation zueinander erzielbar.

Die alternative Ausbildung von Vertiefungen in denen die Permanentmagneten eintauchend angeordnet sind (nicht gezeigt, aber in Fig. 4B diskutiert) kann auch hier gewählt werden. Diese Vertiefungen dienen dann als Abdeckung zum Verhindern des Eindringens von Schmutz oder Feuchtigkeit bzw. zum mechanischen Schutz der sich drehenden Teile bzw. der Permanentmagnete (vgl. auch senkrechte Striche in Fig. 2).

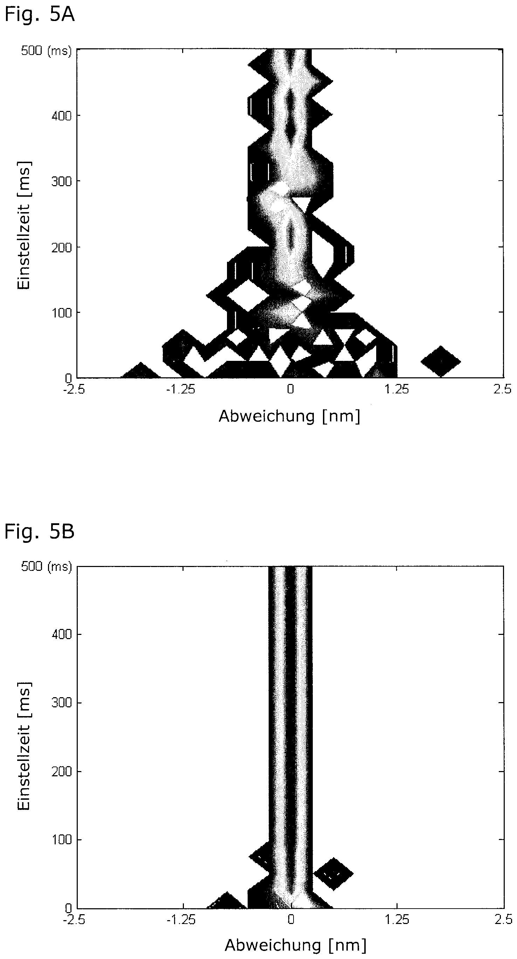

Die Figur 5 stellt schematisch in einem Messdaten-Plot einen Vergleich der Einstellzeiten einer ausgewählten Wellenlänge, basierend auf der messbaren Wellenlängen-Abweichung, mit einem aus dem Stand der Technik bekannten Monochromator (Fig. 5A) und dem erfindungsgemässen Monochromator 1 (Fig. 5B) dar.

Die Fig. 5A veranschaulicht die Einstellzeit des aus dem Stand der Technik bekannten Monochromators. Die Abszisse stellt die vom Nullpunkt bzw. Sollwert ausgehende Abweichung der die nachgeschaltete Schlitzblende 5,5' treffenden Wellenlänge (angegeben in nm) in beide Richtungen (+/-) dar, während die Ordinate die jeweils für eine Einstellung erforderliche Zeit (angegeben in ms) darstellt. Es sind die vom Nullpunkt ausgehenden Abweichungen in Relation zur Einstellzeit nach einem Wellenlängen-Sprung von 100 nm ohne Dämpfung aufgenommen. Wie anhand von dem Messdaten-Plot zu erkennen, nimmt die Abweichung mit abnehmender Einstellzeit zu. Beispielsweise beträgt die Abweichung +/- 1.25 nm bei einer Einstellzeit von weniger als 100 ms. Bei Einstellzeiten > 200 ms beträgt die Abweichung immer noch +/- 0.75 nm. Dies bedeutet zwar eine Halbierung der Abweichung, allerdings ist auch diese Abweichung, d.h. die Variation in der Wellenlänge des effektiv durch die nachgeschaltete Schlitzblende 5,5' tretenden Lichts in der Praxis immer noch zu hoch.

Die Fig. 5B zeigt den Messdaten-Plot der Wellenlängen-Abweichungen in Relation zur Einstellzeit, ebenfalls gemessen nach einem Wellenlängen-Sprung von 100 nm. Bei diesen Messungen ist das optische Gitter des erfindungsgemässen Monochromators 1 durch die Wirkung der Wirbelstrombremse gedämpft. Wie zu erkennen, sind die Abweichungen bei diesen Messungen in Relation zu den in Fig. 5A aufgenommenen Messungen auf beeindruckende Weise reduziert. Lediglich im Bereich sehr kurzer Einstellzeiten von < 100 ms sind vereinzelte Abweichungen von ca. +/- 0.4 nm bis +/- 0.75 nm messbar. Bei Einstellzeiten von > 100 ms sind jedoch durchwegs Abweichungen von lediglich maximal +/- 0.4 nm messbar. Somit ist der wesentliche Vorteil der erfindungsgemässen Dämpfung deutlich nachgewiesen.

Besonders gross ist der Zeitspar-Effekt bei der Messung eines gesamten Spektrums in kleinen Wellenlängenschritten, wenn für höchste Präzision des Absorptionswertes pro Wellenlänge mehrere Blitze gemittelt werden. Beispielsweise umfasst dies einen Wellenlängenbereich von 200 - 1000 nm, der in 1 nm-Schritten abgerastert wird, wobei pro Wellenlänge jeweils über 10 Blitze gemittelt wird. Dabei dauert die Gitterbewegung bei einem herkömmlichen Monochromator jeweils etwa 40 msec, die Wartezeit für das Ausschwingen etwa 250 msec und die Messung der 10 Blitze (bei einer Blitzfrequenz von 400 Hz) etwa 25 msec. Insgesamt ist solch eine Messung nach 252 Sekunden beendet. Der erfindungsgemässe Monochromator benötigt durch die auf beispielsweise 90 msec reduzierte Ausschwingzeit bei sonst gleichen Einstellungen nur etwa 124 Sekunden. Damit reduziert sich der Zeitaufwand für eine Spektralmessung auf nur mehr die Hälfte.

Die Figur 6 zeigt einen beispielhaften Aufbau des erfindungsgemässen Monochromators 1, wobei die Fig. 6A den Monochromator 1 in einer Seitenschnittansicht zeigt und die Fig. 6B den Monochromator 1 in einer Draufsicht zeigt. Der in Fig. 6A gezeigte Monochromator 1 ist hierbei entlang einer in Fig. 6B angezeigten Linie X-X geschnitten. Der Monochromator 1 umfasst eine Antriebs-Einheit 8 mit einem Schrittmotor, welcher über sein Gehäuse fest mit einem oberen Gehäuseabschnitt bzw. Aufbau des Monochromators 1 verbunden ist. Eine Welle 15 des Schrittmotors bzw. der Antriebs-Einheit 8 ragt hierbei in vertikaler Richtung durch den Gehäuseabschnitt bzw. den Aufbau hindurch in das Gehäuse des Monochromators 1 herein. Am distalen Abschnitt der Welle 15 ist ein im Wesentlichen L-förmiger Lagerabschnitt 16 drehstarr an der Welle 15 angeflanscht bzw. mit dieser verbunden. Das optische Gitter 2 ist an einem parallel zur Längsrichtung der Welle 15 bzw. zur Längsachse 9 ausgerichteten Abschnitt des Lagerabschnitts 16 angebracht. Das optische Gitter 2 ist hierbei derart ausgerichtet, dass dessen Ebene parallel zur Längsrichtung der Welle 15 verläuft. An der Welle 15 ist ebenfalls die elektrisch leitfähige Scheibe 11 derart befestigt, dass die Welle 15 durch den axialen Mittelpunkt der elektrisch leitfähigen Scheibe 11 hindurch läuft. Der Aussenumfang der elektrisch leitfähigen Scheibe 11 ist somit konzentrisch zur Welle 15 und damit zur Längsachse 9 angeordnet. Die elektrisch leitfähige Scheibe 11 ist drehstarr mit der Welle 15 verbunden.

Am oberen Gehäuseabschnitt bzw. Aufbau des Monochromators 1 sind in einem Bereich, welcher deckungsgleich mit der elektrisch leitfähigen Scheibe 11 ist, mehrere Permanentmagnete 13 angeordnet. Dies ist besonders deutlich anhand der Draufsicht in Fig. 6B zu erkennen. Diese Permanentmagnete 13 sind hierbei ebenfalls konzentrisch zur Welle 15 und zur Längsachse 9 angeordnet und am oberen Gehäuseabschnitt bzw. Aufbau des Monochromators 1 fixiert. Die Permanentmagnete 13 können beispielsweise Neodym-Eisen-Bor (NdFeB) Magnete sein, beispielsweise Rundmagnete mit einem Durchmesser von 6.0 mm und einer Länge von 5.0 mm. Zur Erhöhung der Dämpfwirkung sind die Permanentmagnete 13 derart angeordnet, dass (wie in Fig. 6B gezeigt) jeweils benachbarte Permanentmagnete 13 mit entgegengesetzter Polarität angeordnet sind.

Zur Maximierung der Dämpfung zwischen den Permanentmagneten 13 und der elektrisch leitfähigen Scheibe 11 durch die Wirkung der Wirbelstrombremse sollte ein Abstand A zwischen den einzelnen Permanentmagneten 13 und der zugewandten Fläche der elektrisch leitfähigen Scheibe 11 so gering wie möglich eingestellt werden. Die einzelnen Permanentmagnete 13 sind hierzu in entsprechende Aussparungen bzw. Bohrungen im oberen Gehäuseabschnitt des Monochromators 1 eingebracht und darin fixiert.

Bei einem Stoppen des Schrittmotors der Antriebs-Einheit 8 nach einem Drehen des optischen Gitters 2 über die Welle 15 und den Lagerabschnitt 16 werden die hierbei auftretenden Schwingungen durch die Wirkung der Wirbelstrombremse schnell und zuverlässig gedämpft. Die Wirbelstrombremse ist hierbei durch die Anordnung der elektrisch leitfähigen Scheibe 11 im Zusammenwirken mit den Permanentmagneten 13 ausgebildet. Somit kann ein Wechsel zwischen verschiedenen, ausgewählten Wellenlängen zum Durchführen von spektralen Analysen innerhalb des Monochromators 1 schnell und bei nur geringen Wartezeiten durchgeführt werden. Neben diesen Vorteilen wird eine besonders hohe Präzision der jeweils ausgewählten Wellenlängen erzielt. Die Dämpfung erfolgt vorteilhafterweise verschleissfrei, wodurch die Präzision weiter erhöht wird.

Beliebige Kombinationen der offenbarten Merkmale gehören zum Umfang der vorliegenden Erfindung. Die Bezugszeichen weisen jeweils auf entsprechende Merkmale hin, auch wenn nicht in jedem Fall ausdrücklich darauf Bezug genommen wird.

Die in der Beschreibung gemachten, geometrischen Hinweise, wie senkrecht, vertikal, horizontal beziehen sich auf die gezeigten Figuren und sind nicht in jedem Fall gültig. Demzufolge können die Elemente des erfindungsgemässen Monochromators 1 im Raum beliebig angeordnet werden, solange die prinzipiellen erfinderischen Kriterien erfüllt werden, wie diese in den Ansprüchen definiert sind.

Weiter geometrische Definitionen wie rechtwinklig oder parallel sind im Rahmen der Herstellungsgenauigkeit zu verstehen und können mehr oder weniger genau eingehalten aber auch abgewandelt werden.

### Bezugszeichenliste:

- 1: Monochromator
- 2,2': optisches Gitter
- 3: Lichtquelle
- 4: erste Schlitzblende
- 5,5': erste bzw. zweite nachgeschaltete Schlitzblende
- 6: Analyseeinrichtung
- 7,7': Antriebs-Stange
- 8: Antriebs-Einheit
- 9: Längsachse
- 10: Steuereinheit
- 11: erste(s) Dämpfungs-Element, elektrisch leitfähige Scheibe
- 12: zweite(s) Dämpfungs-Element, Scheibe
- 13: Permanentmagnet, Einzelmagnet
- 14: magnetische Achse
- 15: Welle
- 16: Lagerabschnitt
- A: Abstand
- M: Mittelpunkt

## Patentansprüche

1. Monochromator (1), welcher umfasst:
- zumindest ein optisches Gitter (2) zum stufenlosen Auffächern von einfallendem Licht einer Lichtquelle (3), wobei das optische Gitter (2) zum Ausrichten gegenüber dem einfallenden Licht drehbar ausgebildet ist;
- eine Antriebs-Einheit (8) zum Drehen des optischen Gitters (2);
- eine Antriebs-Stange (7), welche zum Drehen des optischen Gitters (2) die Antriebs-Einheit (8) mit dem optischen Gitter (2) verbindet, wobei die Antriebs-Stange (7) eine Längsachse (9) umfasst, um welche diese Antriebs-Stange (7) und das optische Gitter (2) drehbar sind, und
- eine Steuereinheit (10), welche die Antriebs-Einheit (8) und damit die Drehung des optischen Gitters (2) steuert,
**dadurch gekennzeichnet, dass** die Antriebs-Einheit (8) des Monochromators (1) zudem umfasst:
- ein erstes Dämpfungs-Element (11), welches eine Scheibe (11) ist, die aus einem elektrisch leitfähigen und nichtferromagnetischen Material hergestellt ist, und
- ein zweites Dämpfungs-Element (12), welches zumindest ein Magnetfeld mit einer magnetischen Achse (14) bereitstellt, welche die elektrisch leitfähige Fläche durchdringt, und welches eine Vielzahl von Einzelmagneten (13) umfasst, welche jeweils entsprechend eine Vielzahl von Magnetfeldern bereitstellen, wobei die magnetischen Achsen (14) aller Einzelmagnete (13) parallel zur Längsachse (9) der Antriebs-Stange (7) verlaufen, wobei eines von dem ersten und zweiten Dämpfungs-Element (11,12) mit der Antriebs-Stange (7) fest verbunden und mit dieser um deren Längsachse (9) drehbar in Relation zum weiteren vom ersten und zweiten Dämpfungs-Element (12,11) ausgebildet ist, wobei das erste und zweite Dämpfungs-Element (11,12) zueinander reibungsfrei zum Dämpfen des Einschwingens von dem mit der Antriebs-Stange (7) verbundenen optischen Gitter (2) angeordnet sind.

2. Monochromator (1) nach Anspruch 1, **dadurch gekennzeichnet, dass** die magnetische Achse (14) des zumindest einen von dem zweiten Dämpfungs-Element (12) bereitgestellten Magnetfeld parallel zur Längsachse (9) der Antriebs-Stange (7) verläuft.

3. Monochromator (1) nach Anspruch 1 oder 2, **dadurch gekennzeichnet, dass** das erste Dämpfungs-Element (11), welches die elektrisch leitfähige Fläche bereitstellt, fest mit der Antriebs-Stange (7) verbunden ist und das zweite Dämpfungs-Element (12) an einem Gehäuse des Monochromator (1) angeordnet ist.

4. Monochromator (1) nach einem der vorhergehenden Ansprüche, **dadurch gekennzeichnet, dass** das erste Dämpfungs-Element (11) mit einem Abstand (A) vom zweiten Dämpfungs-Element (12) beabstandet ist.

5. Monochromator (1), nach einem der vorhergehenden Ansprüche **dadurch gekennzeichnet, dass** jeder Einzelmagnet (13) als ein Elektromagnet oder als ein Permanentmagnet (13) ausgebildet ist.

6. Monochromator (1) nach einem der vorhergehenden Ansprüche, **dadurch gekennzeichnet, dass** das erste Dämpfungs-Element (11) und das zweite Dämpfungs-Element (12) jeweils scheibenförmig ausgebildet sind.

7. Monochromator (1) nach einem der vorhergehenden Ansprüche, **dadurch gekennzeichnet, dass** das erste Dämpfungs-Element (11) und das zweite Dämpfungs-Element (12) formgleich ausgebildet und im Bereich der Antriebs-Stange (7) wenigstens abschnittsweise deckungsgleich zueinander angeordnet sind.

8. Monochromator (1) nach einem der vorhergehenden Ansprüche, **dadurch gekennzeichnet, dass** das erste Dämpfungs-Element (11) und das zweite Dämpfungs-Element (12) jeweils scheibenförmig ausgebildet sind und konzentrisch zu der Antriebs-Stange (7) angeordnet sind.

9. Monochromator (1) nach einem der vorhergehenden Ansprüche, **dadurch gekennzeichnet, dass** die Antriebs-Einheit (8) einen Schrittmotor umfasst.

10. Monochromator (1) nach einem der vorhergehenden Ansprüche, ferner umfassend zumindest eine erste nachgeschaltete Schlitzblende (5) zum Isolieren einer bestimmten Wellenlänge des durch das optische Gitter (2) aufgefächerten Lichts.

11. Monochromator (1) nach einem der vorhergehenden Ansprüche, ferner umfassend zumindest ein zweites optisches Gitter (2') und eine zweite nachgeschaltete Schlitzblende (5').

12. Monochromator (1), nach Anspruch 1, **dadurch gekennzeichnet, dass**
- die Antriebs-Einheit (8) einen Schrittmotor umfasst,
- das zweite Dämpfungs-Element (12) eine Vielzahl von Permanentmagneten (13) umfasst, welche, konzentrisch zur elektrisch leitfähigen Scheibe angeordnet, an einem Gehäuse bzw. Aufbau des Monochromators (1) angebracht sind, und welche jeweils entsprechend eine Vielzahl von Magnetfeldern bereitstellen, wobei die magnetischen Achsen (14) aller Permanentmagnete (13) parallel zur Längsachse (9) der Antriebs-Stange (7) und senkrecht durch die elektrisch leitfähige Scheibe (11) verlaufen.

13. Monochromator (1) nach Anspruch 12, **dadurch gekennzeichnet, dass** die elektrisch leitfähige Scheibe (11) aus einer Aluminium-Legierung besteht.

14. Monochromator (1) nach Anspruch 12 oder 13, **dadurch gekennzeichnet, dass** der Abstand zwischen den Permanentmagneten (13) und der elektrisch leitfähigen Scheibe (11) zwischen 0.2 mm und 0.5 mm beträgt.

15. Verwendung eines Monochromators (1) nach einem der vorhergehenden Ansprüche zum spektralen Isolieren einer bestimmten Wellenlänge aus einfallendem Licht.

16. System zum Messen zumindest eines der Signale ausgewählt aus der Gruppe Fluoreszenz und Absorption von mit dem Licht aus einer Lichtquelle bestrahlten Proben, **dadurch gekennzeichnet, dass** es zumindest einen Monochromator (1) gemäss einem der Ansprüche 1 bis 14 umfasst.

## Claims

1. A monochromator (1), comprising:
- at least one optical grating (2) adapted to continuously fan-out incident light of a source of light (3), wherein the optical grating (2) is configured rotatable in order to allow alignment thereof in relation to the incident light;
- a drive unit (8) for rotating said optical grating (2);
- a drive rod (7) connecting the drive unit (8) to the optical grating (2) for rotating said optical grating (2), wherein the drive rod (7) comprises a longitudinal axis (9), wherein the drive rod (7) and the optical grating (2) are configured rotatable around thereof, and
- a control unit (10) for controlling the drive unit (8) and thereby the rotation of the optical grating (2),
**characterized in that** the drive unit (8) of the monochromator (1) further comprises:
- a first damping element (11), which comprises a disc (11), which comprises an electrical conductive and non-ferromagnetic material, and
- a second damping element (12), which provides at least one magnetic field having a magnetic axis (14) which penetrates the electrical conductive surface, und which comprises a plurality of single magnets (13), wherein each thereof provides a plurality of magnetic fields, wherein the magnetic axes (14) of all single magnets (13) extend in parallel to the longitudinal axis (9) of the drive rod (7),
wherein one of the first and second damping elements (11,12) is fixedly connected to the drive rod (7) and is configured rotatable along with the drive rod (7) around the longitudinal axis (9) thereof in relation to the other one of the first and second damping elements (12,11), wherein the first and second damping elements (11,12) are arranged to each other free of friction for damping transient oscillation of the optical grating (2) which is connected to the drive rod (7).

2. The monochromator (1) according to claim 1, **characterized in that** the magnetic axis (14) of the at least one magnetic field provided by the second damping element (12) extends in parallel to the longitudinal axis (9) of the drive rod (7).

3. The monochromator (1) according to claims 1 or 2, **characterized in that** the first damping element (11), which provides the electrical conductive surface, is connected fixedly to the drive rod (7), and the second damping element (12) is arranged on a housing of the monochromator (1).

4. The monochromator (1) according to one of the preceding claims, **characterized in that** the first damping element (11) and the second damping element (12) are spaced apart from each other by a distance (A).

5. The monochromator (1) according to one of the preceding claims, **characterized in that** each single magnet (13) comprises an electric magnet or a permanent magnet (13).

6. The monochromator (1) according to one of the preceding claims, **characterized in that** the first damping element (11) and the second damping element (12) are formed disc-shaped, respectively.

7. The monochromator (1) according to one of the preceding claims, **characterized in that** the first damping element (11) and the second damping element (12) are formed identically and are arranged to each other at least partially congruent in the vicinity of the drive rod (7).

8. The monochromator (1) according to one of the preceding claims, **characterized in that** the first damping element (11) and the second damping element (12) are formed disc-shaped, respectively, and are arranged concentrically in relation to the drive rod (7).

9. The monochromator (1) according to one of the preceding claims, **characterized in that** the drive unit (8) comprises a step motor.

10. The monochromator (1) according to one of the preceding claims, further comprising at least one first downstream slit diaphragm (5) adapted to insulate a particular wavelength of the light fanned-out by the optical grating (2).

11. The monochromator (1) according to one of the preceding claims, further comprising at least one second optical grating (2') and a second downstream slit diaphragm (5').

12. The monochromator (1) according to claim 1, **characterized in that**:
- the drive unit (8) comprises a step motor,
- the second damping element (12) comprises a plurality of permanent magnets (13), which are mounted to a housing or rather assembly of the monochromator (1), arranged concentrically in relation to the electrical conductive disc, and wherein each thereof provides a plurality of magnetic fields, wherein the magnetic axes (14) of all permanent magnets (13) extend in parallel to the longitudinal axis (9) of the drive rod (7) and penetrate the electrical conductive disc (11) perpendicularly.

13. The monochromator (1) according to claim 12, **characterized in that** the electrical conductive disc (11) comprises an aluminum alloy.

14. The monochromator (1) according to claim 12 or 13, **characterized in that** the permanent magnets (13) and the electrical conductive disc (11) are spaced apart from each other by 0.2 mm to 0.5 mm.

15. A usage of a monochromator (1) according to one of the preceding claims for continuously spectral isolation of a particular wavelength from incident light.

16. A system for measuring at least one of signals selected from a group comprising fluorescence and absorption of samples irradiated with a light from a source of light, **characterized by** comprising at least one monochromator (1) according to one of claims 1 to 14.

## Revendications

1. Monochromateur (1) comprenant :
- au moins un réseau optique (2) pour disperser en continu une lumière incidente d'une source lumineuse (3), le réseau optique (2) étant conçu pivotant par rapport à la lumière incidente pour l'alignement ;
- une unité d'entraînement (8) pour faire tourner le réseau optique (2) ;
- une tige d'entraînement (7) qui, pour faire tourner le réseau optique (2), raccorde l'unité d'entraînement (8) avec le réseau optique (2), la tige d'entraînement (7) comprenant un axe longitudinal (9) autour duquel cette tige d'entraînement (7) et le réseau optique (2) peuvent pivoter, et
- une unité de commande (10) qui commande l'unité d'entraînement (8) et avec elle la rotation du réseau optique (2),
**caractérisé en ce que** l'unité d'entraînement (8) du monochromateur (1) comprend en outre :
- un premier élément d'amortissement (11) qui se présente sous la forme d'un disque et qui est fabriqué à partir d'un matériau électriquement conducteur et non ferromagnétique, et
- un deuxième élément d'amortissement (12) qui fournit au moins un champ magnétique avec un axe magnétique (14) qui traverse la surface électriquement conductrice, et qui comprend une multitude d'aimants individuels (13) qui fournissent chacun en conséquence une multitude de champs magnétiques, les axes magnétiques (14) de tous les aimants individuels (13) s'étendant parallèlement à l'axe longitudinal (9) de la tige d'entraînement (7),
dans lequel un desdits premier et deuxième éléments d'amortissement (11, 12) est raccordé fixement à la tige d'entraînement (7) et est conçu de façon à pouvoir tourner avec cette dernière autour de l'axe longitudinal de cette dernière (9) par rapport à l'autre desdits premier et deuxième éléments d'amortissement (12, 11), le premier et le deuxième éléments d'amortissement (11, 12) étant agencés sans frottement l'un par rapport à l'autre pour amortir l'effet électrique transitoire du réseau optique (2) relié à la tige d'entraînement (7).

2. Monochromateur (1) selon la revendication 1, **caractérisé en ce que** l'axe magnétique (14) du au moins un champ magnétique fourni par le deuxième élément d'amortissement (12) s'étend parallèlement à l'axe longitudinal (9) de la tige d'entraînement (7).

3. Monochromateur (1) selon la revendication 1 ou 2, **caractérisé en ce que** le premier élément d'amortissement (11) qui fournit la surface électriquement conductrice, est relié fixement à la tige d'entraînement (7), et **en ce que** le deuxième élément d'amortissement (12) est agencé au niveau d'un boîtier du monochromateur (1).

4. Monochromateur (1) selon l'une des revendications précédentes, **caractérisé en ce que** le premier élément d'amortissement (11) est situé à une distance (A) du deuxième élément d'amortissement (12).

5. Monochromateur (1) selon l'une des revendications précédentes, **caractérisé en ce que** chaque aimant individuel (13) est conçu comme un électroaimant ou comme un aimant permanent (13).

6. Monochromateur (1) selon l'une des revendications précédentes, **caractérisé en ce que** le premier élément d'amortissement (11) et le deuxième élément d'amortissement (12) sont réalisés chacun en forme de disque.

7. Monochromateur (1) selon l'une des revendications précédentes, **caractérisé en ce que** le premier élément d'amortissement (11) et le deuxième élément d'amortissement (12) sont réalisés de forme identique et **en ce que** dans la zone de la tige d'entraînement (7), ils sont agencés au moins par endroits en se recouvrant.

8. Monochromateur (1) selon l'une des revendications précédentes, **caractérisé en ce que** le premier élément d'amortissement (11) et le deuxième élément d'amortissement (12) sont réalisés chacun en forme de disque et sont agencés de façon concentrique par rapport à la tige d'entraînement (7).

9. Monochromateur (1) selon l'une des revendications précédentes, **caractérisé en ce que** l'unité d'entraînement (8) comprend un moteur pas à pas.

10. Monochromateur (1) selon l'une des revendications précédentes, comprenant en outre au moins un premier diaphragme à fente (5) monté en aval pour isoler une certaine longueur d'onde de la lumière dispersée par le réseau optique (2).

11. Monochromateur (1) selon l'une des revendications précédentes, comprenant en outre au moins un deuxième réseau optique (2') et un deuxième diaphragme à fente (5') monté en aval.

12. Monochromateur (1) selon la revendication 1, **caractérisé en ce que**
- l'unité d'entraînement comprend un moteur pas à pas,
- le deuxième élément d'amortissement (12) comprend une multitude d'aimants permanents (13) qui sont agencés de façon concentrique par rapport au disque électriquement conducteur, qui sont fixés au niveau d'un boîtier ou structure du monochromateur (1) et qui fournissent chacun une multitude de champs magnétiques, les axes magnétiques (14) de tous les aimants permanents (13) s'étendant parallèlement à l'axe longitudinal (9) de la tige d'entraînement (7) et perpendiculairement à travers le disque électriquement conducteur (11).

13. Monochromateur (1) selon la revendication 12, **caractérisé en ce que** le disque électriquement conducteur (11) est composé d'un alliage d'aluminium.

14. Monochromateur (1) selon la revendication 12 ou 13, **caractérisé en ce que** la distance entre les aimants permanents (13) et le disque électriquement conducteur (11) est comprise entre 0,2 mm et 0,5 mm.

15. Utilisation d'un monochromateur (1) selon l'une des revendications précédentes pour isoler spectralement une certaine longueur d'onde de la lumière incidente.

16. Système pour mesurer au moins un des signaux sélectionnés à partir du groupe comprenant la fluorescence et l'absorption d'échantillons irradiés avec la lumière issue de la source lumineuse, **caractérisé en ce qu'**il comprend au moins un monochromateur (1) selon l'une des revendications 1 à 14.
